# EUROPEAN PATENT SPECIFICATION

(11) **EP 3 846 140 B1**
(45) Date of publication and mention of the grant of the patent: **30.11.2022**
(21) Application number: 19938524.6
(22) Date of filing: 23.07.2019
(51) Int. Cl.: B65G 59/06, G07F 11/44, G07F 13/06, G07F 11/00, G07F 11/24, G07F 13/10

(54) **DISCHARGING MECHANISM, MATERIAL STORING DEVICE, AND SELF-SERVICE VENDING MACHINE**
MATERIALABFALLMECHANISMUS, MATERIALSPEICHERVORRICHTUNG, UND SELBSTBEDIENUNGSVERKAUFSAUTOMAT
MÉCANISME DE DÉCHARGEMENT DE MATÉRIAU, DISPOSITIF DE STOCKAGE DE MATÉRIAU, ET DISTRIBUTEUR AUTOMATIQUE EN LIBRE-SERVICE

(43) Date of publication of application: 07.07.2021
(73) Proprietor: Cino Technology (Shenzhen) Limited, Shenzhen, Guangdong 518104 (CN)
(72) Inventor: LONG, Qiyi, Shenzhen, Guangdong 518104 (CN)
(74) Representative: Petculescu, Ana-Maria
(86) International application number: PCT/CN2019/097247
(87) International publication number: WO 2021/012177

(56) References cited:
- CN-A- 108 922 034
- CN-U- 201 790 575
- CN-U- 202 541 850
- CN-U- 203 749 211
- CN-U- 203 796 943
- DE-A1- 3 239 315
- JP-A- 2012 230 552
- JP-U- S5 241 700
- US-A- 1 742 371
- US-A- 2 000 008
- US-A- 4 513 948
- US-A1- 2003 155 543
- US-A1- 2005 194 397
- US-A1- 2011 284 572

## Description

### TECHNICAL FIELD

The present application relates to the technical field of material conveying technologies, and relates to a discharging mechanism, a material storing device having the discharging mechanism, and a self-service vending machine having the discharging mechanism.

### BACKGROUND

Coffee is one of the three major beverages in the world, and people around the world are loving coffee more and more. Coffee machines are becoming more and more popular, which make the preparation of coffee more convenient and simpler, and the "coffee culture" is embodied in every moment of life.

With the popularity of vending devices in China, people may find vending devices for selling coffee in shopping malls, office buildings, and communities. These vending devices generally include a storage mechanism configured to store capsules, a discharging mechanism connected to the storage mechanism and configured to control regular falloff of the capsules, a transportation mechanism configured to transport capsules, and a brewing structure configured to brewing coffee. For example, US 20050194397A1 discloses a discharging mechanism according to the preamble of claim 1, in particular, the document provides a dispensing apparatus for dispensing an article from a stack of articles each having a periphery comprises an isolating device including one or more isolating members which are movable between a hold position spaced from the stack of articles, and a dispense position contacting the periphery of one or more articles in the stack and supporting the one or more articles including an adjacent article which is adjacent an endmost article while not contacting the periphery of the endmost article by the one or more isolating members, to isolate the endmost article from the other articles in the stack to permit the endmost article to be separated from the other articles and be dispensed. JP 2012-230552A provides a cup separation mechanism of a cooking type vending machine capable of quickly and surely separating the bottom cup from a cup stock one by one. In the cup separation mechanism, by moving the tip of the lower claw inward in the radial direction and the tip of the upper claw outward in the radial direction, the cup supported by the tip of the upper claw is dropped to the lower claw. By moving the tip of the lower claw outward in the radial direction and the tip of the upper claw inward in the radial direction, the second cup from the bottom is moved to the tip of the upper claw. US 1742371A provides an article dispensing device, the chief feature thereof consists in the nested and enclosed arrangement of the several parts with an exposed actuating means engageable by an article receiving holder when the latter is positioned to receive an article, but which is formed and movable such that the member or its movement does not interfere with the discharge of an article from the dispenser to the article holder.

At present, the discharging mechanism in the vending device generally needs a plurality of power devices to drive opening and closing of a control valve to complete falloff and interception of the capsules, and prevent falloff of a plurality of capsules at one time. This discharging mechanism has a large number of parts, such that the connections between these parts are complicated, and thus the manufacture and assembling cost is high.

### SUMMARY

The invention is defined as stated in claim 1. Embodiments of the present application are intended to provide a discharging mechanism, a material storing device having the discharging mechanism, and a self-service vending machine having the discharging mechanism, to solve the technical problem that the conventional discharging mechanism has a large number of parts, and the manufacture and assembling cost is high.

To solve the above technical problem, the present application provides the technical solutions set out in the appended set of claims.

As compared with discharging mechanism available in the market for use in a self-service vending machine, the discharging mechanism according to the present application causes the first valve module and the second valve module to be linked to the rotation member by arrangement of the first guide module and the second guide module, which implements falloff and interception of the capsules. In this way, the entire mechanism has fewer parts, and the manufacture and assembling cost is lower.

### BRIEF DESCRIPTION OF THE DRAWINGS

For clearer descriptions of technical solutions according to the embodiments of the present application, drawings that are to be referred for description of the embodiments are briefly described hereinafter. Apparently, the drawings described hereinafter merely illustrate some embodiments of the present application. Persons of ordinary skill in the art may also derive other drawings based on the drawings described herein without any creative effort.
FIG. 1 is a schematic perspective view of a discharging mechanism in one direction according to one embodiment of the present application.
FIG. 2 is a schematic exploded view of the discharging mechanism in FIG. 1.
FIG. 3 is a schematic perspective view of a rotation member in FIG. 2 in one direction.
FIG. 4 is a schematic perspective view of a first end cover in FIG. 2 in one direction.
FIG. 5 is a schematic perspective view of the first end cover in FIG. 2 in another direction.
FIG. 6 is a schematic perspective view of a first baffle in FIG. 2 in one direction.
FIG. 7 is a schematic perspective view of the first baffle in FIG. 2 in another direction.
FIG. 8 is a schematic exploded view of the first cover and the rotation member in FIG. 2.
FIG. 9 is a schematic view of a first valve module in an open state.
FIG. 10 is a schematic view of one scenario where the first valve module in a closed state.
FIG. 11 is a schematic view of another scenario where the first valve module in the closed state.
FIG. 12 is a schematic perspective view of a second end cover in FIG. 2 in one direction.
FIG. 13 is a schematic perspective view of the second end cover in FIG. 2 in another direction.
FIG. 14 is a schematic perspective view of a second baffle in FIG. 2 in one direction.
FIG. 15 is a schematic perspective view of the second baffle in FIG. 2 in another direction.
FIG. 16 is a schematic exploded view of the second cover and the rotation member in FIG. 2.
FIG. 17 is a schematic view of a second valve module in a closed state.
FIG. 18 is a schematic view of the second valve module in an open state.
FIG. 19 is a schematic perspective view of a material storing device according to an embodiment of the present application.
FIG. 20 is a sectional view of the material storing device in FIG. 17.

### DETAILED DESCRIPTION

For better understanding of the present application, the present application is described in detail with reference to attached drawings and specific embodiments. It should be noted that, when an element is defined as "being secured or fixed to" another element, the element may be directly positioned on the element or one or more centered elements may be present therebetween. When an element is defined as "being connected or coupled to" another element, the element may be directly connected or coupled to the element or one or more centered elements may be present therebetween. As used herein in this specification, the terms "vertical", "horizontal", "left", "right", "inner", "outer", and similar expressions are only for illustration purposes, and only indicate substantial positional relationships. For example, with respect to the term "vertical", if it is not strictly required that the positional relationship is strictly vertical for a specific purpose, but is essentially vertical or employs the feature of being vertical, such meaning of "vertical" falls within the category of the term "vertical" in this specification.

Unless the context clearly requires otherwise, throughout the specification and the claims, technical and scientific terms used herein denote the meaning as commonly understood by a person skilled in the art. As used herein, the term "and/or" in reference to a list of two or more items covers all of the following interpretations of the term: any of the items in the list, all of the items in the list and any combination of the items in the list.

In the specification, the term "mount" includes fixing or retaining an element or member or device to a specific position or place by welding, threading, snapping, bonding or the like. The element or member or device may remain stationary in the specific position or place or may be movable within a specified range; and the element or member or device, after being fixed or retained to the specific position or place, may be detachable or not detachable, which are not limited in the embodiments of the present application.

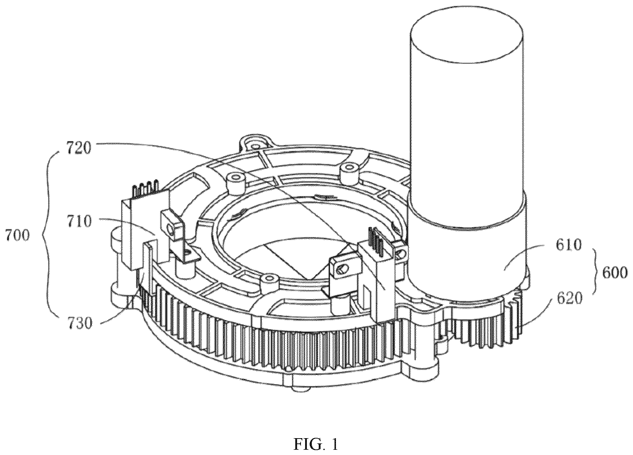

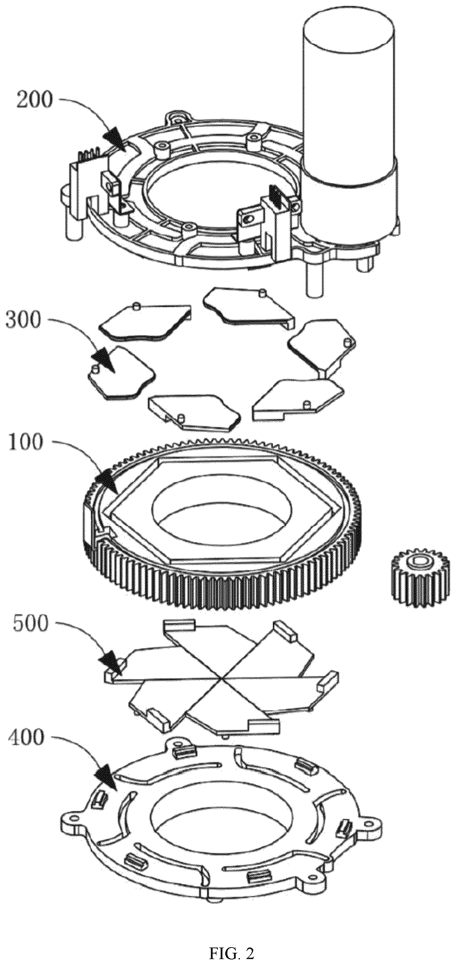

Referring to FIG. 1 and FIG. 2, a schematic perspective view and a schematic exploded view of a discharging mechanism in one direction according to an embodiment of the present application are illustrated. The discharging mechanism includes a rotation member 100, a first end cover 200, a first valve module 300, a second end cover 400, a second valve module 500, and a drive module 600.

The rotation member 100 is provided with a storage space configured to accommodate a capsule. The first end cover 200 and the second end cover 400 are respectively mounted at two ends of the rotation member 100, and are respectively provided with a feed hole and a discharge hole that are in communication with the storage space, the two end covers are securely connected, and the rotation member is capable of rotating between the two end covers. The first valve module 300 is arranged between the rotation member 100 and the first end cover 200, and is configured to open or close the feed hole. The second valve module 500 is arranged between the rotation member 100 and the second end cover 400, and is configured to open or close the discharge hole. The drive module 600 is configured to drive the rotation member to rotate between the two end covers.

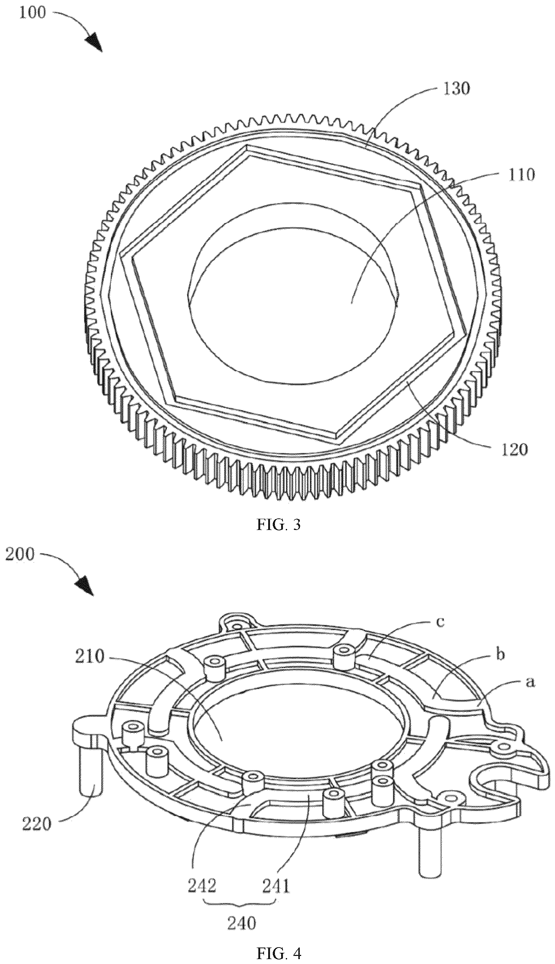

Referring to FIG. 3, a schematic perspective view of the rotation member 100 in one direction is illustrated. Also referring to FIG. 1 and FIG. 2, the rotation member 100 is entirely in a cylindrical shape, and an axially penetrating storage space 110 is coaxially arranged at a center portion of the rotation member 100. Preferably, the storage space 110 is in a cylindrical shape. The top of the rotation member 100 is provided with six first guide grooves 120 extending along a straight line, wherein the six first guide grooves 120 are uniformly angularly spaced apart along a circumferential direction of the storage space 110. Preferably, the six first guide grooves 120 are connected to form a regular hexagon. That is, a spacing between two adjacent first guide grooves 120 is 0 degree.

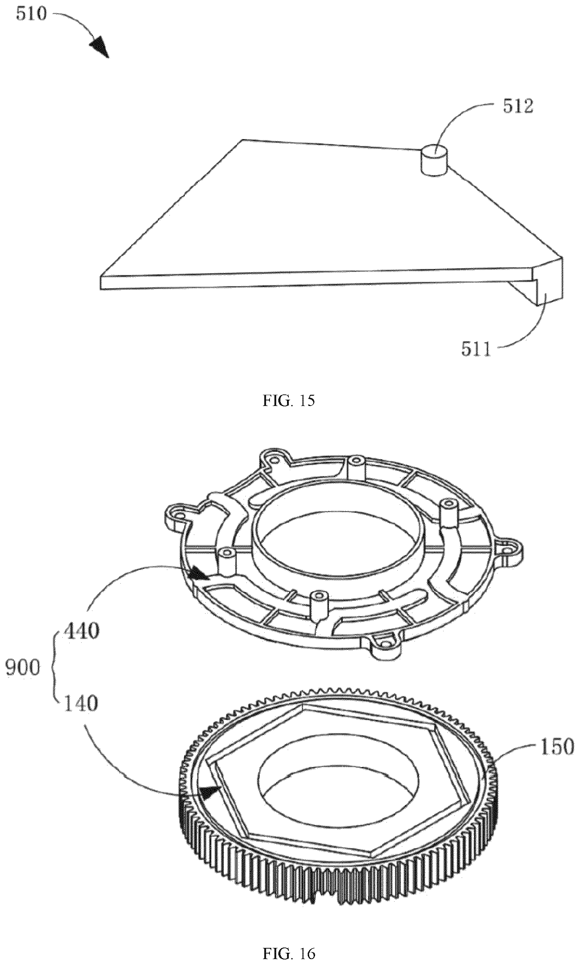

Correspondingly, with reference to FIG. 16, the bottom of the rotation member 100 is further provided with six second guide grooves 140 extending along a straight line, wherein the six second guide grooves 140 are uniformly angularly spaced apart along the circumferential direction of the storage space 110. Preferably, the six second guide grooves 140 are connected to form a regular hexagon. That is, a spacing between two adjacent second guide grooves 140 is 0 degree.

The top of the rotation member 100 is further provided with a rotation groove 130 at a periphery of the hexagonal groove structure, wherein the first rotation groove 130 is a circular groove structure which is coaxially arranged with the storage space 110. Correspondingly, the bottom of the rotation member 100 is provided with a second rotation groove 150, wherein the second rotation groove 150 is also a circular shape coaxially arranged with the storage space 110. Preferably, the second rotation groove 150 corresponds to the first rotation groove in terms of position.

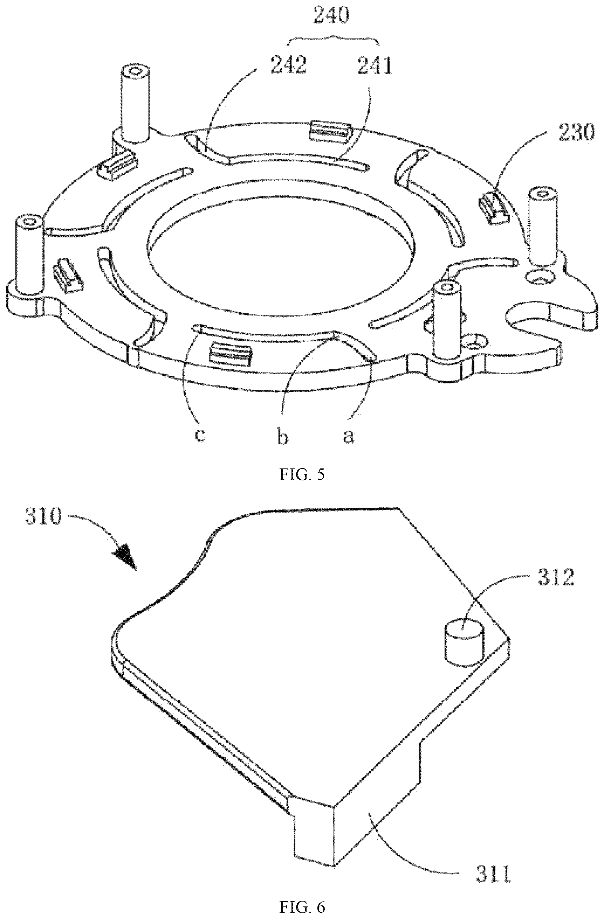

Referring to FIG. 4 and FIG. 5, schematic perspective views of a first end cover 200 in two directions are illustrated. Also referring to FIG. 1 to FIG. 3, the first end cover 200 is entirely in a flat cylinder shape, wherein a middle portion thereof is provided with a penetrating feed hole 210. The first end cover 200 is mounted at the top of the rotation member 100. Preferably, the first end cover 200 and the rotation member 100 are coaxially arranged. The feed hole 210 is in communication with the storage space 110. Preferably, the feed hole 210 and the storage space 110 are coaxially arranged.

A periphery of the first end cover 200 is provided with several securing posts 220 extending towards the second end cover 400. An end of the securing post 200 proximal to the second end cover 400 is provided with a threaded hole configured to be securely connected to a securing seat on the second end cover 400 hereinafter.

To make the rotation member 100 rotate with respect to the first end cover 200, an end of the first end cover 200 facing towards the top of the rotation member 100 is further provided with several first rotation protrusions 230 mating with the first rotation groove 130. Preferably, the several first rotation protrusions 230 are circumferentially arrayed about an axial line of the feed hole 210. The first rotation protrusion 230 is inserted into the first rotation groove, and slides in the first rotation groove, such that the rotation member 100 is rotatable with respect to the first end cover 200.

An end of the first end cover 200 facing towards the rotation member 100 is further provided with six first curved grooves 240, wherein the six first curved grooves 240 are uniformly angularly spaced apart about a rotation axial line of the rotation member 100. The first curved groove 240 includes a first portion 241 that extends about a circumferential direction of the rotation member 100 to define an arc shape, and a second portion 242 that extends from an end of the first portion 241 towards a direction distal from the axial line of the rotation member 100. Preferably, the second portion 242 is in an arc shape, and a tangent line at all positions of the second portion 242 defines an obtuse angle with a tangent line at an end of the first portion 241 proximal to the second portion 242. Using the view angle in FIG. 2 as a reference, with reference to FIG. 4, one end of the first portion 241 proximal to the second portion 242 extends towards the other end thereof in a substantially counterclockwise direction, and one end of the second portion 242 proximal to the first portion 231 towards the other end thereof in a substantially counterclockwise direction.

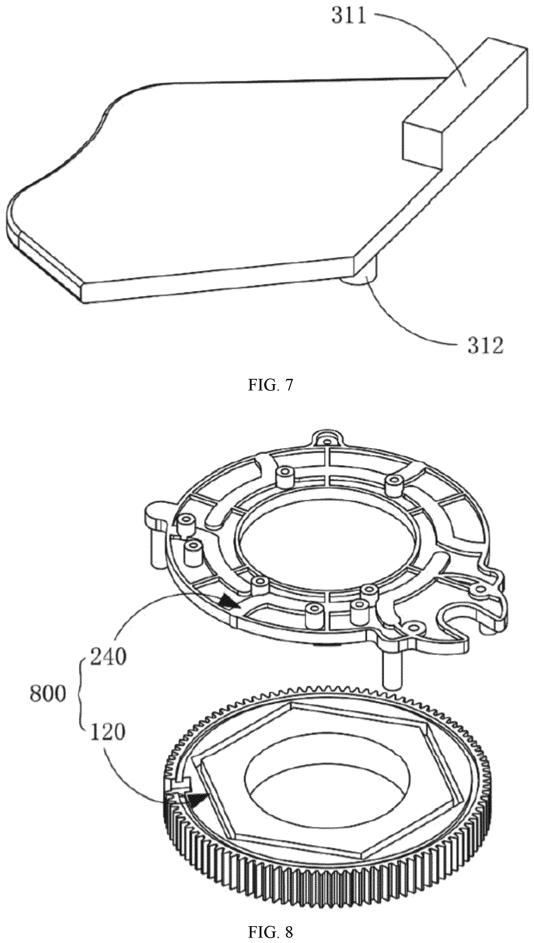

Referring to FIG. 6 and FIG. 7, schematic perspective views of a first baffle in two directions are illustrated. Also referring to FIG. 1 to FIG. 5, the first valve module 300 is entirely arranged between the first end cover 200 and the rotation member 100, and includes six first baffles 310. The six first baffles 310 are likewise uniformly angularly spaced apart about the rotation axial line of the rotation member 100, and these six first baffles 310 one-to-one correspond to the first guide groove 120 and the first curved groove 240.

The first baffle 310 is entirely in a flat plate-shaped structure. An end of the first baffle 310 proximal to the rotation member 100 is provided with a first slide block 311 mating with the first guide groove 120. The first slide block 311 is inserted into the first guide groove 120 and is slidable along the first guide groove 120. Therefore, the first baffle 310 may be slidable with respect to the rotation member 100 under cooperation of the first slide block 311 and the first guide groove 120.

An end of the first baffle 311 proximal to the first end cover 200 is provided with a first guide post 312 mating with the first curved groove 240. The first guide post 312 is inserted into the first curved groove 240, and is relatively slidable along the first curved groove 240.

Referring to FIG. 8 to FIG. 11, a schematic exploded view of the first end cover and the rotation member, and schematic views when the first valve module is in an open state and when the first valve module is in a closed state are illustrated. Each first guide groove 120 and each first curved groove 240 constitute a first guide module 800 configured to control the first valve module 300 to close or open the feed hole 210 when the rotation member 100 rotates. Hereinafter, also referring to FIG. 1 to FIG. 7, opening and closing of the first valve module are briefly described.

For ease of description, hereinafter, the end of the second portion 242 distal from the first portion 241 is referred to as "position a", and the end of the second portion 242 proximal to the first portion 241 and the end of the first portion 241 proximal to the second portion 242 are both referred to as "position b", and the end of the first portion 241 distal from the second portion 242 is referred to as "position c".

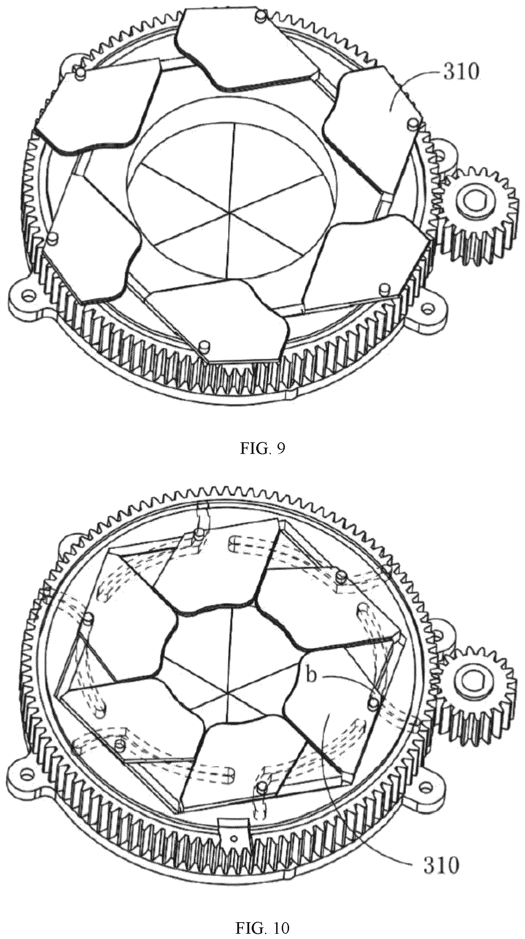

In an initial state, a specific phase difference is present between the first curved groove 240 and the first guide groove 120, the first slide block 311 on the first baffle 310 is positioned in the first guide groove 120, and the first guide post 312 is positioned at position a in the first curved groove. In this case, each first baffle 310 is entirely at a periphery of the storage space, and the first valve module 300 is in the open state, which may be illustrated in FIG. 9.

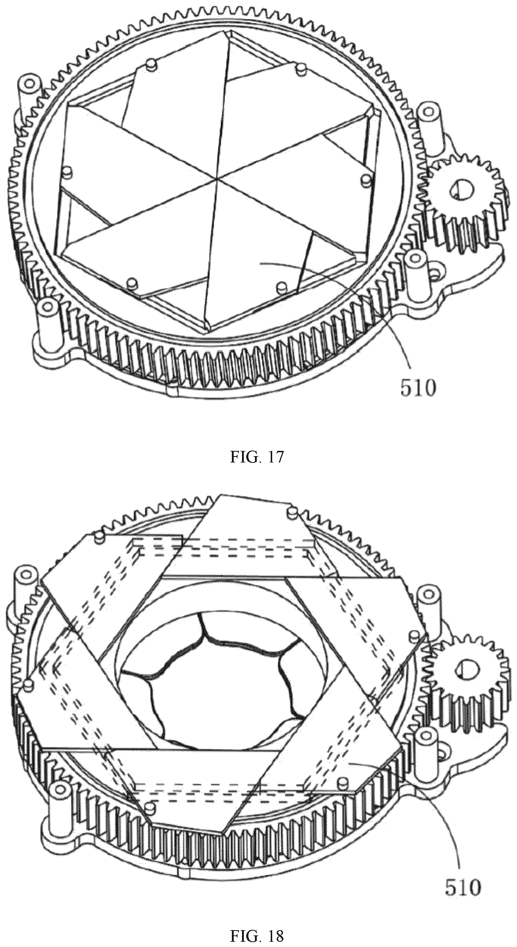

After the rotation member 100 rotates by a predetermined angle counterclockwise (using the view angle in FIG. 2 as a reference), the first guide post 312 slides from the first groove 440 to position b'. During this process, the first baffle 310 slides in the first guide groove with 120 respect to the rotation member 100 under the effect of abutting against the side wall of the second portion 242 and the slide direction is reverse to the rotation direction of the rotation member 100. In addition, each first baffle 310 moves to at least partially shield the top profile of the storage space 100 to close the feed hole 210, and the first valve module 300 is in the closed state, which may be illustrated in FIG. 17.

In this embodiment, in the closed state, an end of the first baffle 310 proximal to an axial line of the rotation space 110 is approximately in an arc shape, and two side walls in joint with an end of the arc shape define a included angle of 60 degrees. The arc shaped side walls of the six first baffles 310 enclose an approximate cylindrical-shaped gap. Each first baffle 310 does not absolutely cover the storage space 110 and the feed hole 210. The two side walls each abut against the corresponding side wall on the adjacent first baffle 310. The first baffles 310 are designed to prevent interference caused between the first baffles 310 during movement, and to achieve an effect of leaving no slit therebetween in the closed state. In addition, since the adjacent second baffles 310 abut against each other, each second baffle 310 may not freely slide, and thus the second valve module in the closed state is stable. In other embodiments of the present application, the first baffle 310 may also be provided with the above arc-shaped structure, and instead the side walls on both sides progressively extend and intersect. In this case, the closed state of the first valve module 300 means that the storage space 110 and the feed hole 210 are absolutely covered.

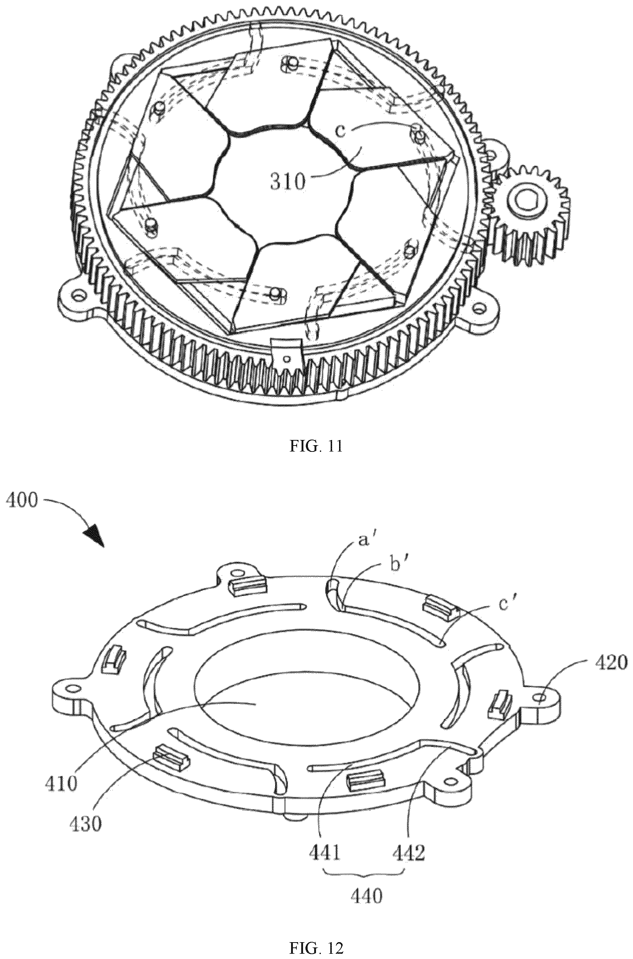

The rotation member 100 continues to rotate until the first guide post 312 slides to position c. Since the first portion 241 is an arc groove structure with the axial line of the rotation member 241 as the center, during the process that the first guide post 312 rotates, with the rotation member 100, from position b to position c, the first portion 241 may not abut against the first guide post 312. In this case, the first baffle 310 may not slide with respect to the rotation member 100. During the movement from position b to position c, the first valve module 300 is constantly in the closed state, which may be illustrated in FIG. 11.

In summary, when the rotation member 100 rotates, the first guide groove 120, the first curved groove 240, the first slide block 311, and the first guide post 312 cooperate with each other to control the first valve module 300 to open or close the storage space and the feed hole.

The design in which the tangent line at all arc line portions of the second portion 242 defines the obtuse angle with the tangent line at the end of the first portion 241 proximal to the second portion 242 ensures that the first guide post 312 constantly abuts against the side wall of the second portion 242 during sliding in the second portion 242, and thus the first baffle 310 is capable of constantly sliding with respect to the rotation member.

It should be understood that even if the first guide groove 120 in the above embodiments is arranged at the end of the rotation member 100 proximal to the first end cover 200, in other embodiments of the present application, the first guide groove may also be arranged on the end of the first end cover proximal to the rotation member, and correspondingly, the first curved groove may be arranged at the end of the rotation member proximal to the first end cover.

The second end cover 400 and the second valve module 500 are described hereinafter.

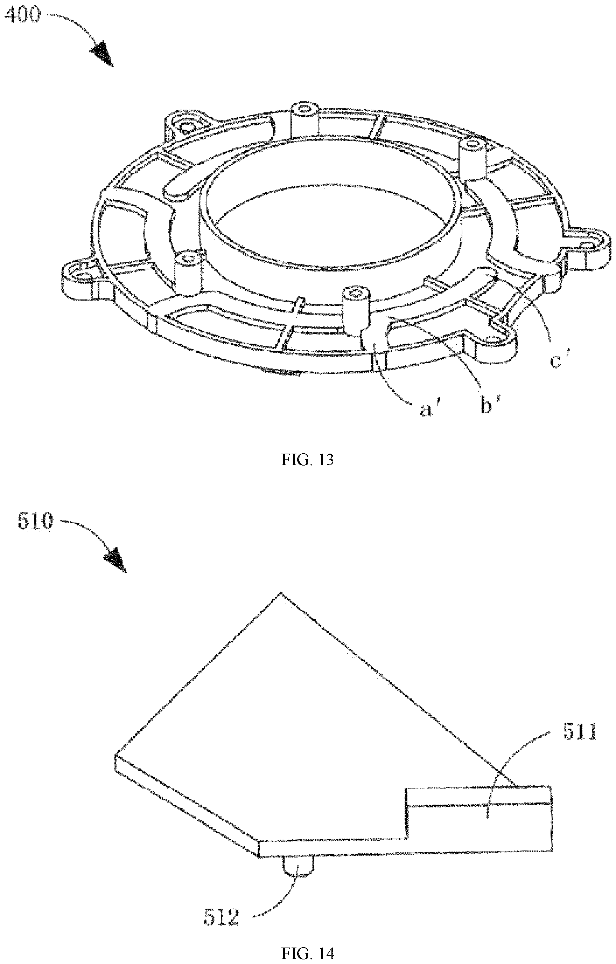

Referring to FIG. 12 and FIG. 13, schematic perspective views of a second end cover 400 in two directions are illustrated. Also referring to FIG. 1 to FIG. 11, the second end cover 400 is entirely in a flat cylinder shape, wherein a middle portion thereof is provided with a penetrating discharge hole 410. The second end cover 400 is mounted at the bottom of the rotation member 100. Preferably, the second end cover 400 and the rotation member 100 are coaxially arranged. The discharge hole 410 is in communication with the storage space 110. Preferably, the discharge hole 410 and the storage space 110 are coaxially arranged.

A periphery of the second end cover 400 is provided with several securing seats 420 mating with the securing post 220. The securing seat 420 is provided with a through hole coaxial to a threaded hole on the securing post 220. A screw is passed through the through hole and is connected to the threaded hole, such that the first end cover 200 is secured to the second end cover 400.

To make the rotation member 100 rotate with respect to the second end cover 400, an end of the second end cover 400 facing towards the top of the rotation member 100 is further provided with several second rotation protrusions 430 mating with the second rotation groove 130. Preferably, the several second rotation protrusions 430 are circumferentially arrayed about an axial line of the discharge hole 410. The second rotation protrusion 430 is inserted into the second rotation groove, and slides in the second rotation groove, such that the rotation member 100 is rotatable with respect to the second end cover 400.

An end of the second end cover 400 facing towards the rotation member 100 is further provided with six second curved grooves 440, wherein the six second curved grooves 440 are uniformly angularly spaced apart about the rotation axial line of the rotation member 100. The second curved groove 440 includes a third portion 441 that extends about a circumferential direction of the rotation member 100 to define an arc shape, and a fourth portion 442 that extends from an end of the first portion 441 towards a direction distal from the axial line of the rotation member 100. Preferably, to cause the fourth portion 442 to better abut against the second guide post, the fourth portion is in an arc shape, and a tangent line at the end of the fourth portion 442 proximal to the third portion defines an obtuse angle with a tangent line at the end of the third portion 441 proximal to the fourth portion 442. Using the view angle in FIG. 2 as a reference, with reference to FIG. 11, one end of the third portion 441 proximal to the fourth portion 442 extends towards the other end thereof in a substantially counterclockwise direction, and one end of the fourth portion 442 proximal to the third portion 441 towards the other end thereof in a substantially counterclockwise direction. Accordingly, the entire extending direction of the second curved groove is reverse to the entire extending direction of the first curved groove. In this paragraph, the term "reverse" may be understood as when the rotation member rotates, one of the two extending directions is consistent with the rotation direction of the rotation member, and the other is opposite to the rotation direction of the rotation member.

Referring to FIG. 14 and FIG. 15, schematic perspective views of a second baffle in two directions are illustrated. Also referring to FIG. 1 to FIG. 13, the second valve module 500 is entirely arranged between the second end cover 400 and the rotation member 100, and includes six second baffles 510. The six second baffles 510 are likewise uniformly angularly spaced apart about the rotation axial line of the rotation member 100, and these six second baffles 510 one-to-one correspond to the second guide groove and the second curved groove 440.

The second baffle 510 is entirely in a flat plate-shaped structure. An end of the second baffle 510 proximal to the rotation member 100 is provided with a second slide block 511 mating with the second guide groove 120. The second slide block 511 is inserted into the second guide groove and is slidable along the second guide groove. Therefore, the first baffle 310 may be slidable with respect to the rotation member 100 under cooperation of the first slide block 511 and the second guide groove.

An end of the second baffle 510 proximal to the second end cover 400 is provided with a second guide post 512 mating with the second curved groove 440. The second guide post 512 is inserted into the second curved groove 440, and is relatively slidable along the second curved groove 440.

Referring to FIG. 16 to FIG. 18, a schematic exploded view of the second end cover and the rotation member, and schematic views when the second valve module 500 is in an open state and when the second valve module 500 is in a closed state are illustrated. Each second guide groove 140 and each second curved groove 440 constitute a second guide module 900 configured to control the second valve module 500 to close or open the discharge hole 410 when the rotation member 100 rotates. Hereinafter, with reference to FIG. 1 to FIG. 5, opening and closing of the second valve module 500 are briefly described.

For ease of description, hereinafter, the end of the fourth portion 442 distal from the third portion 441 is referred to as "position a'", and the end of the fourth portion 442 proximal to the third portion 441 and the end of the third portion 441 proximal to the fourth portion 442 are both referred to as "position b'", and the end of the third portion 441 distal from the fourth portion 442 is referred to as "position c"'.

In an initial state (that is, as described above, the first guide post is at position a, and the first valve module 300 is opened), a specific phase difference is present between the second curved groove 440 and the second guide groove, the second slide block 511 on the second baffle 510 is positioned in the second guide groove, and the second guide post 512 is positioned at position c' in the second curved groove. In this case, the second baffle 510 at least partially extends into a bottom profile of the storage space 110, and the second valve module 500 is in the closed state, which may be illustrated in FIG. 17.

In this embodiment, an end of the second baffle 510 in the closed state proximal to the axial line of the storage space 110 is in an angular shape. The angle is defined by two side walls that are adjacent, and the angle is 60 degrees. This design is intended to prevent the second baffles 510 from causing interference to each other during movement, and meanwhile achieve the effect of leaving no slit therebetween in the closed state.

After the rotation member 100 rotates by a predetermined angle counterclockwise (using the view angle in FIG. 2 as a reference), the first guide post is at position b, the first valve module 300 is closed, and meanwhile, the second guide post 512 slides from the third portion 441 of the second groove 440 to position b'.

Since the third portion 441 is an arc groove structure with the axial line of the rotation member 441 as the center, during the process that the second guide post 512 rotates, with the rotation member 100, from position c' to position b', the third portion 441 may not abut against the second guide post 512. In this case, the second baffle 510 may not slide with respect to the rotation member 100. During the movement from position c' to position b', the second valve module 500 is constantly in the closed state, which may be illustrated in FIG. 17. In addition, since the adjacent second baffles 510 abut against each other, each second baffle 510 may not freely slide, and thus the second valve module in the closed state is stable.

The rotation member 100 continues to rotate counterclockwise (using the view angle in FIG. 2 as a reference) until the first guide post 312 slides to position c, and meanwhile, the second guide post 512moves, in the fourth portion, to position a'. Since the rotation observed from the top the rotation member 100 is reverse to that observed from the bottom of the rotation member. If FIG. 17, FIG. 18, and FIG. 13 are used as references, the rotation member 100 rotates clockwise, which is observed with reference to FIG. 13, FIG. 17, and FIG. 18 herein. During this process, the second baffle 510 slides in the second guide groove with respect to the rotation member 100 under the effect of abutting against the side wall of the fourth portion 442 and the slide direction is reverse to the rotation direction of the rotation member 100, each second baffle 510 moves to be detached from the bottom profile of the storage space 100 to open the storage space 100 and the discharge hole 410, and the second valve module 500 is in the open state, which may be illustrated in FIG. 17.

In summary, when the rotation member 100 rotates, the second guide groove, the second curved groove, the second slide block 511, and the second guide post 512 cooperate with each other to control the second valve module to open or close the discharge hole.

The design in which the tangent line at all arc line portions of the fourth portion 442 defines the obtuse angle with the tangent line at the end of the third portion 441 proximal to the fourth portion 442 ensures that the second guide post 512 constantly abuts against the side wall of the fourth portion 442 during sliding in the fourth portion 442, and thus the second baffle 510 is capable of constantly sliding with respect to the rotation member.

It should be noted that for implementation of the above process, it should be ensured that the phase angle by which the rotation member 100 rotates when the first guide post 312 slides between the two ends (that is, between position a and position b) of the second portion 242 of the first curved groove 240 is equal to the phase angle by which the rotation member 100 rotates when the second guide post 512 slides between the two ends (that is, between position c' and position b') of the third portion 441 of the second curved groove 440.

A phase angle by which the rotation member 100 rotates when the first guide post 312 slides between two ends (that is, between position b and position c) of the first portion 241 of the first curved groove 240 is equal to a phase angle by which the rotation member 100 rotates when the second guide post 512 slides between two ends (that is, between position b' and position a') of the fourth portion 442 of the second curved groove 440.

Further, a phase angle by which the rotation member 100 rotates when the first guide post 312 slides between two ends of the second portion 242 of the first curved groove 240 is equal to a phase angle by which the rotation member 100 rotates when the first guide post 312 slides between two ends of the first portion 241 of the first curved groove 240. Further preferably, the phase angle is 45 degrees.

It should be understood that even if the second guide groove in the above embodiments is arranged at the end of the rotation member 100 proximal to the second end cover 400, in other embodiments of the present application, the second guide groove may also be arranged on the end of the second end cover 400 proximal to the rotation member 100, and correspondingly, the second curved groove may be arranged at the end of the rotation member 100 proximal to the second end cover 400.

The drive module 600 is secured to the first end cover 200, and is configured to drive the rotation member 100 to rotate about an axial line thereof. Specifically, the drive module 600 includes a motor 610 and a drive wheel 620. The drive wheel 620 is in mesh with the rotation member by gears. When the motor drives the drive wheel 620 to rotate, the rotation member 100 synchronously rotate under driving by the drive wheel 620. It may be understood that the drive module 600 is not limited to the combination of motor driving and gear driving in the above embodiment, and may be practiced in other fashions. For example, by a belt, a rack, a worm, or the like structure, rotation between the rotation member 100, and the first end cover 200 and the second end cover 400 may be implemented, which is not limited herein any further.

The discharging mechanism further includes a sensing module 700 and a controller. The sensing module is configured to control the rotation member to rotate within a predetermined space. The controller is connected to the sensing module 700 and the drive module 600, and control, based on information acquired by the sensing module 700, the motor 610 to rotate according to a predetermined configuration.

Specifically, the sensing module 700 includes a first sensing apparatus 710, a second sensing apparatus 720, and a sensing substrate 730. The first sensing apparatus 710 is securely arranged on the first end cover 200 or the second end cover 400, the second sensing apparatus 720 is securely arranged on the first end cover 200 or the second end cover 400, and the sensing substrate 730 is securely arranged on the rotation member 100. The controller is connected to the first sensing apparatus 710, the second sensing apparatus 720, and the drive module 600 respectively.

The two sensing apparatuses are spaced apart by a 90-degree included angle with respect to the axial line of the storage space, that is, the phase angle by which the rotation member rotates when the first guide post 312 slides between two ends of the first curved groove 240. In addition, when the first guide post is at position a of the first curved groove, the sensing substrate 730 is positioned at the first sensing apparatus 710.

In a discharging process, the controller receives an external input discharging information, and controls the rotation member 100 to drive the sensing substrate 730 to move from the first sensing apparatus 710 to the second sensing apparatus 720; and the controller receives in-position information, and controls the drive module 600 to stop running. Afterwards, the controller controls the drive module 600 to drive the rotation member 100 to reversely moves until the sensing substrate 730 is reset to the first sensing apparatus 710; and the controller receives in-position information, and controls the drive module 600 to stop running. The controller waits for input of information in a next discharging process, and then repeats the above operations.

An operating process of controlling material discharging by the discharging mechanism is briefly described with reference to the accompanying drawings hereinafter.

Before material discharging, the discharging mechanism is in a state of storing the capsule. In this case, the sensing substrate 730 is at the first sensing apparatus 710, the first valve module 300 is in an open state, and the second valve module 500 is in a closed state. Correspondingly, the first guide post 312 is at position a, and the second guide post 512 is at position c'.

When receiving the discharging information, the controller controls the drive module 600 to drive the rotation member 100 to counterclockwise rotate by 45 degrees. When the rotation member 100 moves until the first guide post 312 is at position b, the second guide post 512 is at position b'. In this case, the first valve module 300 is in the closed state to intercept the capsules over the storage space 110, and meanwhile the second valve module 500 is also in the closed state.

The drive module 600 continues to drive the rotation member to rotate by 45 degrees until the sensing substrate 730 reaches the second sensing apparatus 720. In this case, the first guide post 312 is at position c and the second guide post 512 is at position a', such that the first valve module 300 is in the closed state and may intercept the capsules over the storage space 110, and meanwhile the second valve module 500 is in the open state to release the capsules in the storage space 110.

Afterwards, the controller controls the drive module 600 to drive the rotation member to reversely rotate by 45 degrees. In this case, the first guide post 312 is at position b, and the second guide post 512 is at position b', such that the first valve module 300 and the second valve module 500 are both in the closed state.

The drive module 600 drives the rotation member to continue to rotate by 45 degrees until the sensing substrate 730 reaches the first sensing apparatus 710. In this case, the first guide post 312 is at position a and the second guide post 512 is at position c', such that the first valve module 300 is in the open state and the second valve module 500 is in the closed state to maintain the state of storing the capsules. Until now, a discharging process is complete. In this entire discharging process, at least one of the first valve module 300 and the second valve module 500 is in the closed state to prevent leakage of the capsules.

The discharging mechanism links the rotation member 100 to the first valve module 300 by the first guide module, and links the rotation member 100 to the second valve module 500 by the second guide module. While the rotation member 100 rotates, under the driving by the rotation member, by reverse movements, one of the first valve module 300 and the second valve module 500 is in the open state, and the other is in the closed state. In this way, falloff and interception of the capsules are smartly implemented.

The conventional discharging mechanism in the market mostly employ a solution of stepwise controlling two valve modules. In this solution, a first valve module needs to be firstly closed and the second valve module is opened to implement the discharging process, then the second valve module is closed, and afterwards the first valve module is opened such that the discharging mechanism is reset to a storage state. This discharging mechanism needs a plurality of power sources, and the entire discharging process takes a long time. However, the discharging mechanism according to the present application needs only one power device, and an entire discharging process may be implemented by a forward-reverse rotation process. This discharging mechanism has a shorter discharging cycle, and the user does not need to takes a long time to wait. In addition, the discharging mechanism has fewer parts, and the manufacture and assembling cost is lower.

In addition, when the second valve module 500 is closed, a closed plane with no gap is defined, and thus capsules packaged with aluminum foils in the market may be corrected, such that such capsules may remain in a horizontally placement regardless of in what posture the capsules enter the storage space. When the first valve module 300 is closed, a columnar gap is defined at the center thereof. Since the aluminum foiled capsules are packaged into a flying disc shape. The gap mates with the second valve module such that the gap is coaxially or approximately coaxially pressed over the aluminum foiled capsules, which further corrects the posture of the capsules.

It should be understood that even if in this embodiment, the first rotation groove 130 and the second rotation groove are both arranged on the rotation member 100, in other embodiments of the present application, the first rotation groove 130 may also be arranged at the end of the first end cover proximal to the rotation member 100, and correspondingly, the first rotation protrusion 230 is arranged at the end of the rotation member 100 proximal to the first end cover 200; and the second rotation groove may also be arranged at the end of the second end cover 400 proximal to the rotation member 100, and correspondingly, the second rotation protrusion 430 is arranged at the end of the rotation member 100 proximal to the second end cover 400. Since in practice a stroke of the rotation member is only 90 degrees, the first rotation groove and the second rotation groove may also be actually an arc groove with a central angle being greater than the stroke of the rotation member.

In should be understood that in this embodiment, when the valve module is opened or closed, it is not necessary that the valve module absolutely covers or detaches from the end profile of the storage space (or the feed hole and the discharge hole). Instead, it is possible that the valve module partially covers or detaches from the end profile of the storage space (or the feed hole and the discharge hole), which may apply as long as the capsules may be intercepted or released.

It should be understood that the present application sets no limitation to the number of baffles included in the first valve module and the second valve module. For example, when the first baffle has a sufficiently large area, the first baffle may accommodate the use requirements. However, since when the area of the baffle is over-large, the rotation of the rotation member is not balanced, the number of baffles is preferably more than two, and with reference to the area of the baffle, further preferably more than three.

It should be noted that the discharging mechanism may be not only employed to store and drop the capsules, but also employed to store materials other than the capsules.

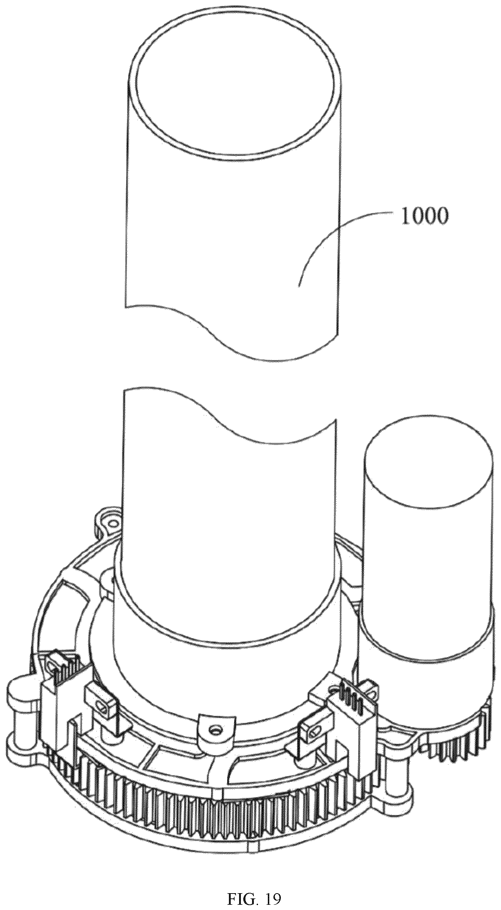

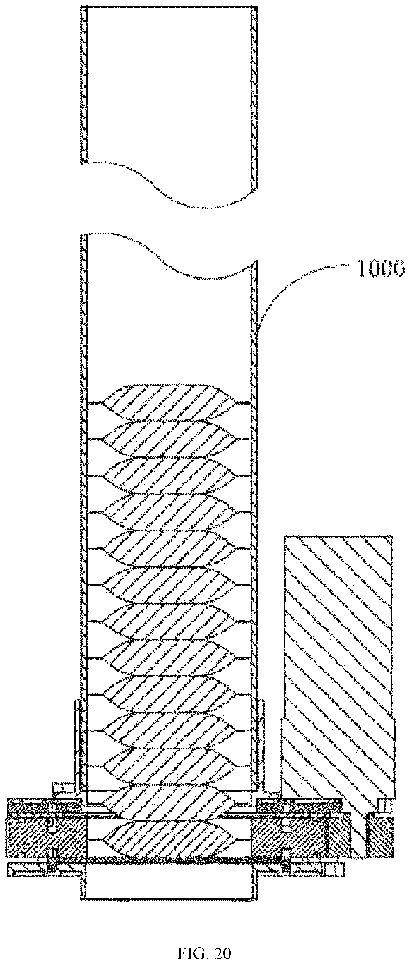

Referring to FIG. 19 and FIG. 20, the present application further provides a material storing device. The material storing device includes a barrel 1000 configured to accommodate capsules, and the discharging mechanism as described above. Also referring to FIG. 1 to FIG. 18, the discharging mechanism is secured to an end of the barrel 1000, and a port at an end of the barrel is in communication with the feed hole. Preferably, the barrel 1000 and the feed hole are coaxially arranged.

The material storing device includes the discharging mechanism as described above, and has a shorter discharging cycle over the conventional material storing device available in the market. Therefore, the user does not need to take a long time to wait. In addition, the material storing device has fewer parts, and the manufacture and assembling cost is lower.

The present application further provides a self-service vending machine. The self-service vending machine includes the material storing device as described above. The self-service vending machine may be employed to sell coffee capsules, but also may be employed to sell brewed coffee or sell other products or items.

The self-service vending machine includes the discharging mechanism as described above, and has a shorter discharging cycle over the conventional self-service vending machine available in the market. Therefore, the user does not need to take a long time to wait. In addition, the self-service vending machine entirely has fewer parts, and the manufacture and assembling cost is lower.

## Claims

1. A discharging mechanism, comprising:
a rotation member (100), provided with a storage space (110) penetrating through the rotation member;
a first end cover (200), mounted at one end of the rotation member (100), the first end cover (200) being provided with a feed hole (210) in communication with one end of the storage space (110);
a second end cover (400), mounted at the other end of the rotation member (100), the second end cover (400) being provided with a discharge hole (410) in communication with the other end of the storage space (110), wherein the rotation member (110) is rotatable with respect to the first end cover (200) and the second end cover (400);
a first valve module (300), arranged between the first end cover (200) and the rotation member (100);
a second valve module (500), arranged between the second end cover (400) and the rotation member (100);
a first guide module (800), configured to control the first valve module (300) to close or open the feed hole (210) when the rotation member (100) rotates; and
a second guide module (900), configured to control the second valve module (500) to close or open the discharge hole (410) when the rotation member (100) rotates;
wherein when one of the first valve module (300) and the second valve module (500) is in an open state, the other of the first valve module (300) and the second valve module (500) is in a closed state;
**characterized in that** the first guide module (800) comprises a first guide groove (120) and a first curved groove (240), wherein the first guide groove (120) is positioned on an end surface at an end of the rotation member (100) facing towards the end cover (200) and the first curved groove (240) is positioned on an end surface at an end of the first end cover (200) facing towards the rotation member (100), or the first curved groove (240) is positioned on an end surface at an end of the rotation member (100) facing towards the first end cover (200) and the first guide groove (120) is positioned on an end surface at an end of the first end cover (200) facing towards the rotation member (100);
wherein the first valve module (300) comprises a first baffle (310), the first baffle (310) being provided with a first slide block (311) and a first guide post (312), wherein the first slide block (311) is inserted into the first guide groove (120) and the first slide block (311) is slidable along the first guide groove (120), the first guide post (312) is inserted into the first curved groove (240) and the first guide post (312) is slidable along the first curved groove (240), and when the rotation member (100) rotates, the first guide groove (120), the first curved groove (240), the first slide block (311), and the first guide post (312) cooperate with each other to control the first valve module (300) to open or close the feed hole (210);
wherein the first curved groove (240) comprises a first portion (241) circumferentially extending along the rotation member (100), and a second portion (242) extending, from an end of the first portion (241), distally from a rotation axial line of the rotation member (100);
when the first valve module (300) is in an open state, the first guide post (312) is positioned at an end of the second portion (242) of the first curved groove (240) distal from the first portion (241) of the first curved groove (240), and the first slide block (311) is positioned at an end of the first guide groove (120) proximal to the second portion (242); and
when the first slide block (311) slides towards an end of the first guide groove (120) distal from the second portion (242), the first valve module (300) at least partially covers an end portion of the storage space (110) to close the feed hole (210).

2. The discharging mechanism according to claim 1, wherein a phase angle by which the rotation member (100) rotates when the first guide post (312) slides between two ends of the second portion (242) of the first curved groove (240) is equal to a phase angle by which the rotation member (100) rotates when the first guide post (312) slides between two ends of the first portion (241) of the first curved groove (240).

3. The discharging mechanism according to claim 1, wherein the number of first baffles (310), the number of first guide grooves (120), and the number of first curved grooves (240) are all at least three; and
the first baffle (310), the first guide groove (120), and the first curved groove (240) one-to-one correspond to each other, the at least three first guide grooves (120) are uniformly spaced apart about a rotation axial angle of the rotation member (100), and the at least three first curved grooves (240) are uniformly spaced apart about the rotation axial angle of the rotation member (100).

4. The discharging mechanism according to any one of claims 1 to 3, wherein the second guide module (900) comprises a second guide groove and a second curved groove (440), wherein the second guide groove is positioned on an end surface at an end of the rotation member (100) facing towards the end cover (400) and the second curved groove (440) is positioned on an end surface at an end of the second end cover (400) facing towards the rotation member (100), or the second curved groove (440) is positioned on an end surface at an end of the rotation member (100) facing towards the second end cover (400) and the second guide groove is positioned on an end surface at an end of the second end cover (400) facing towards the rotation member (100); and
the second valve module (500) comprises a second baffle (510), the second baffle (510) being provided with a second slide block (511) and a second guide post (512), wherein the second slide block (511) is inserted into the second guide groove and the second slide block (511) is slidable along the second guide groove, the second guide post (512) is inserted into the second curved groove (440) and the second guide post (512) is slidable along the second curved groove (440), and when the rotation member (100) rotates, the second guide groove, the second curved groove (440), the second slide block (511), and the second guide post (512) cooperate with each other to control the second valve module (500) to open or close the discharge hole (410).

5. The discharging mechanism according to claim 4, wherein the second curved groove (440) comprises a third portion (441) circumferentially extending along the rotation member (100), and a fourth portion (442) extending, from an end of the third portion (441), distally from a rotation axial line of the rotation member (100);
when the second valve module (500) is in an open state, the second guide post (512) is positioned at an end of the fourth portion (442) distal from the third portion (441), and the second slide block (511) is positioned at an end of the second guide groove proximal to the fourth portion (442); and
when the second slide block (511) slides towards an end of the second guide groove distal from the fourth portion (442), the second valve module (500) at least partially covers an end portion of the storage space (110) to close the discharge hole (410).

6. The discharging mechanism according to claim 5, wherein a direction pointing from an end of the first portion (241) proximal to the second portion (242) to an end of the first portion (241) distal from the second portion (242) is opposite to a direction pointing from an end of the third portion (441) proximal to the fourth portion (442) to an end of the third portion (441) distal from the fourth portion (442); and
during rotation of the rotation member (100), when the first guide post (312) is positioned at an end of the second portion (242) distal from the first portion (241), the second guide post (512) is positioned at an end of the third portion (441) distal from the fourth portion (442), and when the first guide post (312) is positioned at an end of the first portion (241) distal from the second portion (242), the second guide post (512) is positioned at an end of the fourth portion (442) distal from the third portion (441), such that when one of the first valve module (300) and the second valve module (500) is in an open state, the other of the first valve module (300) and the second valve module (500) is in a closed state.

7. The discharging mechanism according to claim 6, wherein a phase angle by which the rotation member (100) rotates when the second guide post (512) slides between two ends of the third portion (441) is equal to a phase angle by which the rotation member (100) rotates when the first guide post (312) slides between two ends of the second portion (242); and
a phase angle by which the rotation member (100) rotates when the second guide post (512) slides between two ends of the fourth portion (442) is equal to a phase angle by which the rotation member (100) rotates when the first guide post (312) slides between two ends of the first portion (241).

8. The discharging mechanism according to claim 5, wherein the number of second baffles (510), the number of second guide grooves, and the number of second curved grooves (440) are all at least three; and
the second baffle (510), the second guide groove, and the second curved groove (440) one-to-one correspond to each other, the at least three second guide grooves are uniformly spaced apart about a rotation axial angle of the rotation member (100), and the at least three second curved grooves (440) are uniformly spaced apart about the rotation axial angle of the rotation member (100).

9. The discharging mechanism according to any one of claims 1 to 3 and 5, wherein the first end cover (200) and the second end cover (400) are fixed;
one of the rotation member (100) and the first end cover (200) is provided with a first rotation groove (130), and the other of the rotation member (100) and the first end cover (200) is provided with a first rotation protrusion (230), the first rotation protrusion (230) being inserted into the first rotation groove (130), and the first rotation protrusion (230) sliding along the first rotation groove (130) and rotating about a rotation axial line of the rotation member (100); and
one of the rotation member (100) and the first end cover (200) is provided with a second rotation groove, and the other of the rotation member (100) and the first end cover (200) is provided with a second rotation protrusion (430), the second rotation protrusion (430) being inserted into the second rotation groove, and the second rotation protrusion (430) sliding along the second rotation groove and rotating about the rotation axial line of the rotation member (100).

10. The discharging mechanism according to any one of claims 1 to 3 and 5, further comprising a drive module (600); wherein the drive module (600) is configured to drive the rotation member (100) to move along the first direction.

11. The discharging mechanism according to claim 10, further comprising a sensing module (700) and a controller; wherein the sensing module (700) comprises a first sensing apparatus (710), a second sensing apparatus (720), and a sensing substrate (730), and the controller is connected to the first sensing apparatus (710), the second sensing apparatus (720), and the drive module (600);
wherein the first sensing apparatus (710) is securely arranged on the first end cover (200) or the second end cover (400), the second sensing apparatus (720) is securely arranged on the first end cover (200) or the second end cover (400), the sensing substrate (730) is securely arranged on the rotation member (100), and the rotation member (100) drives the sensing substrate (730) to rotate between the first sensing apparatus (710) and the second sensing apparatus (720).

12. A material storing device, **characterized by** comprising a barrel (1000) and the discharging mechanism as defined in any one of claims 1 to 11; wherein the discharging mechanism is secured to an end of the barrel (1000), and a port at an end of the barrel (1000) proximal to the discharging mechanism is in communication with the feed hole (210).

13. A self-service vending machine, **characterized by** comprising the discharging mechanism as defined in any one of claims 1 to 11.

## Patentansprüche

1. Abgabemechanismus, umfassend:
ein Drehelement (100), das mit einem Aufnahmeraum (110) versehen ist, der durch das Drehelement verläuft;
eine erste Endabdeckung (200), die an dem einen Ende des Drehelements (100) angebracht ist, wobei die erste Endabdeckung (200) mit einem Zuführloch (210) in Verbindung mit einem Ende des Aufnahmeraums (110) versehen ist;
eine zweite Endabdeckung (400), die an dem anderen Ende des Drehelements (100) angebracht ist, wobei die zweite Endabdeckung (400) mit einem Abgabeloch (410) in Verbindung mit dem anderen Ende des Aufnahmeraums (110) versehen ist, wobei das Drehelement (110) in Bezug auf die erste Endabdeckung (200) und die zweite Endabdeckung (400) drehbar ist;
ein erstes Ventilmodul (300), das zwischen der ersten Endabdeckung (200) und dem Drehelement (100) angeordnet ist;
ein zweites Ventilmodul (500), das zwischen der zweiten Endabdeckung (400) und dem Drehelement (100) angeordnet ist;
ein erstes Führungsmodul (800), das dazu konfiguriert ist, das erste Ventilmodul (300) so zu steuern, dass es das Zuführloch (210) schließt oder öffnet, wenn sich das Drehelement (100) dreht; und
ein zweites Führungsmodul (900), das dazu konfiguriert ist, das zweite Ventilmodul (500) so zu steuern, dass es das Abgabeloch (410) schließt oder öffnet, wenn sich das Drehelement (100) dreht;
wobei, wenn sich eins von dem ersten Ventilmodul (300) und dem zweiten Ventilmodul (500) in einem geöffneten Zustand befindet, sich das andere von dem ersten Ventilmodul (300) und dem zweiten Ventilmodul (500) in einem geschlossenen Zustand befindet;
**dadurch gekennzeichnet, dass** das erste Führungsmodul (800) eine erste Führungsnut (120) und eine erste gekrümmte Nut (240) umfasst, wobei die erste Führungsnut (120) an einer Endfläche an einem Ende des Drehelements (100) angeordnet ist, das der ersten Endabdeckung (200) zugewandt ist, und die erste gekrümmte Nut (240) an einer Endfläche an einem Ende der ersten Endabdeckung (200) angeordnet ist, das dem Drehelement (100) zugewandt ist, oder die erste gekrümmte Nut (240) an einer Endfläche an einem Ende des Drehelements (100) angeordnet ist, das der ersten Endabdeckung (200) zugewandt ist, und die erste Führungsnut (120) an einer Endfläche an einem Ende der ersten Endabdeckung (200) angeordnet ist, das dem Drehelement (100) zugewandt ist;
wobei das erste Ventilmodul (300) eine erste Trennplatte (310) umfasst, wobei die erste Trennplatte (310) mit einem ersten Gleitblock (311) und einem ersten Führungspfosten (312) versehen ist, wobei der erste Gleitblock (311) in die erste Führungsnut (120) eingeführt ist und der erste Gleitblock (311) in der ersten Führungsnut (120) gleiten kann, wobei der erste Führungspfosten (312) in die erste gekrümmte Nut (240) eingeführt ist und der erste Führungspfosten (312) in der ersten gekrümmten Nut (240) gleiten kann, und wenn das Drehelement (100) sich dreht, die erste Führungsnut (120), die erste gekrümmte Nut (240), der erste Gleitblock (311) und der erste Führungspfosten (312) zusammenwirken, um das erste Ventilmodul (300) so zu steuern, dass es das Zuführloch (210) öffnet oder schließt;
wobei die erste gekrümmte Nut (240) einen ersten Abschnitt (241), der sich in Umfangsrichtung am Drehelement (100) erstreckt, und einen zweiten Abschnitt (242) umfasst, der sich von einem Ende des ersten Abschnitts (241) weg von einer Drehachse des Drehelements (100) erstreckt;
wobei, wenn sich das erste Ventilmodul (300) in einem geöffneten Zustand befindet, der erste Führungspfosten (312) an einem Ende des zweiten Abschnitts (242) der ersten gekrümmten Nut (240) entfernt von dem ersten Abschnitt (241) der ersten gekrümmten Nut (240) angeordnet ist und der erste Gleitblock (311) an einem Ende der ersten Führungsnut (120) nahe dem zweiten Abschnitt (242) angeordnet ist; und
wenn der erste Gleitblock (311) in Richtung eines Endes der ersten Führungsnut (120) entfernt von dem zweiten Abschnitt (242) gleitet, das erste Ventilmodul (300) einen Endabschnitt des Aufnahmeraums (110) wenigstens teilweise abdeckt, um das Zuführloch (210) zu schließen.

2. Abgabemechanismus nach Anspruch 1, wobei ein Phasenwinkel, um den sich das Drehelement (100) dreht, wenn der erste Führungspfosten (312) zwischen den beiden Enden des zweiten Abschnitts (242) der ersten gekrümmten Nut (240) gleitet, gleich einem Phasenwinkel ist, um den sich das Drehelement (100) dreht, wenn der erste Führungspfosten (312) zwischen den beiden Enden des ersten Abschnitts (241) der ersten gekrümmten Nut (240) gleitet.

3. Abgabemechanismus nach Anspruch 1, wobei die Anzahl der ersten Trennplatten (310), die Anzahl der ersten Führungsnuten (120) und die Anzahl der ersten gekrümmten Nuten (240) jeweils wenigstens drei beträgt; und
die erste Trennplatte (310), die erste Führungsnut (120), und die erste gekrümmte Nut (240) miteinander in Eins-zu-eins-Beziehung stehen, die wenigstens drei ersten Führungsnuten (120) gleichmäßig um einen Rotationsachsenwinkel des Drehelements (100) beabstandet sind und die wenigstens drei ersten gekrümmten Nuten (240) gleichmäßig um den Rotationsachsenwinkel des Drehelements (100) beabstandet sind.

4. Abgabemechanismus nach einem der Ansprüche 1 bis 3, wobei das zweite Führungsmodul (900) eine zweite Führungsnut und eine zweite gekrümmte Nut (440) umfasst, wobei die zweite Führungsnut an einer Endfläche an einem Ende des Drehelements (100) angeordnet ist, das der zweiten Endabdeckung (400) zugewandt ist, und die zweite gekrümmte Nut (440) an einer Endfläche an einem Ende der zweiten Endabdeckung (400) angeordnet ist, das dem Drehelement (100) zugewandt ist, oder die zweite gekrümmte Nut (440) an einer Endfläche an einem Ende des Drehelements (100) angeordnet ist, das der zweiten Endabdeckung (400) zugewandt ist, und die zweite Führungsnut an einer Endfläche an einem Ende der zweiten Endabdeckung (400) angeordnet ist, das dem Drehelement (100) zugewandt ist; und
wobei das zweite Ventilmodul (500) eine zweite Trennplatte (510) umfasst, wobei die zweite Trennplatte (510) mit einem zweiten Gleitblock (511) und einem zweiten Führungspfosten (512) versehen ist, wobei der zweite Gleitblock (511) in die zweite Führungsnut eingeführt ist und der zweite Gleitblock (511) in der zweiten Führungsnut gleiten kann, der zweite Führungspfosten (512) in die zweite gekrümmte Nut (440) eingeführt ist und der zweite Führungspfosten (512) in der zweiten gekrümmten Nut (440) gleiten kann, und wenn das Drehelement (100) sich dreht, die zweite Führungsnut, die zweite gekrümmte Nut (440), der zweite Gleitblock (511) und der zweite Führungspfosten (512) zusammenwirken, um das zweite Ventilmodul (500) so zu steuern, dass es das Zuführloch (410) öffnet oder schließt.

5. Abgabemechanismus nach Anspruch 4, wobei die zweite gekrümmte Nut (440) einen dritten Abschnitt (441), der sich in Umfangsrichtung am Drehelement (100) erstreckt, und einen vierten Abschnitt (442) umfasst, der sich von einem Ende des dritten Abschnitts (441) weg von der Drehachse des Drehelements (100) erstreckt;
wobei, wenn sich das zweite Ventilmodul (500) in einem geöffneten Zustand befindet, der zweite Führungspfosten (512) an einem Ende des vierten Abschnitts (442) entfernt von dem dritten Abschnitt (441) angeordnet ist und der zweite Gleitblock (511) an einem Ende der zweiten Führungsnut nahe dem vierten Abschnitt (442) angeordnet ist; und
wenn der zweite Gleitblock (511) in Richtung eines Endes der zweiten Führungsnut entfernt von dem vierten Abschnitt (442) gleitet, das zweite Ventilmodul (500) einen Endabschnitt des Aufnahmeraums (110) wenigstens teilweise abdeckt, um das Abgabeloch (410) zu schließen.

6. Abgabemechanismus nach Anspruch 5, wobei eine Richtung von einem Ende des ersten Abschnitts (241) nahe dem zweiten Abschnitt (242) hin zu einem Ende des ersten Abschnitts (241) entfernt von dem zweiten Abschnitt (242) zu einer Richtung von einem Ende des dritten Abschnitts (441) nahe dem vierten Abschnitt (442) zu einem Ende des dritten Abschnitts (441) entfernt von dem vierten Abschnitt (442) entgegengesetzt ist; und
wenn während der Drehung des Drehelements (100) der erste Führungspfosten (312) an einem Ende des zweiten Abschnitts (242) entfernt von dem ersten Abschnitt (241) angeordnet ist, der zweite Führungspfosten (512) an einem Ende des dritten Abschnitts (441) entfernt von dem vierten Abschnitt (442) angeordnet ist, und wenn der erste Führungspfosten (312) an einem Ende des ersten Abschnitts (241) entfernt von dem zweiten Abschnitt (242) angeordnet ist, der zweite Führungspfosten (512) an einem Ende des vierten Abschnitts (442) entfernt von dem dritten Abschnitt (441) angeordnet ist, derart, dass in einem geöffneten Zustand von einem von dem ersten Ventilmodul (300) und dem zweiten Ventilmodul (500) das andere von dem ersten Ventilmodul (300) und dem zweiten Ventilmodul (500) in einem geschlossenen Zustand ist.

7. Abgabemechanismus nach Anspruch 6, wobei ein Phasenwinkel, um den sich das Drehelement (100) dreht, wenn der zweite Führungspfosten (512) zwischen den beiden Enden des dritten Abschnitts (441) gleitet, gleich einem Phasenwinkel ist, um den sich das Drehelement (100) dreht, wenn der erste Führungspfosten (312) zwischen den beiden Enden des zweiten Abschnitts (242) gleitet; und
wobei ein Phasenwinkel, um den sich das Drehelement (100) dreht, wenn der zweite Führungspfosten (512) zwischen den beiden Enden des vierten Abschnitts (442) gleitet, gleich einem Phasenwinkel ist, um den sich das Drehelement (100) dreht, wenn der erste Führungspfosten (312) zwischen den beiden Enden des ersten Abschnitts (241) gleitet.

8. Abgabemechanismus nach Anspruch 5, wobei die Anzahl der zweiten Trennplatten (510), die Anzahl der zweiten Führungsnuten und die Anzahl der zweiten gekrümmten Nuten (440) jeweils wenigstens drei beträgt; und
die zweite Trennplatte (510), die zweite Führungsnut, und die zweite gekrümmte Nut (440) miteinander in Eins-zu-eins-Beziehung stehen, die wenigstens drei zweiten Führungsnuten gleichmäßig um einen Rotationsachsenwinkel des Drehelements (100) beabstandet sind und die wenigstens drei zweiten gekrümmten Nuten (440) gleichmäßig um den Rotationsachsenwinkel des Drehelements (100) beabstandet sind.

9. Abgabemechanismus nach einem der Ansprüche 1 bis 3 und 5, wobei die erste Endabdeckung (200) und die zweite Endabdeckung (400) fixiert sind;
wobei eines von dem Drehelement (100) und der ersten Endabdeckung (200) mit einer ersten Drehnut (130) versehen ist und das andere von dem Drehelement (100) und der ersten Endabdeckung (200) mit einem ersten Drehvorsprung (230) versehen ist, der in die erste Drehnut (130) eingeführt ist, und der erste Drehvorsprung (230) in der ersten Drehnut (130) gleitet und sich um die Rotationsachse des Rotationselements (100) dreht; und
wobei eines von dem Drehelement (100) und der ersten Endabdeckung (200) mit einer zweiten Drehnut versehen ist und das andere von dem Drehelement (100) und der ersten Endabdeckung (200) mit einem zweiten Drehvorsprung (430) versehen ist, der in die zweite Drehnut eingeführt ist, und der zweite Drehvorsprung (430) in der zweiten Drehnut gleitet und sich um die Rotationsachse des Rotationselements (100) dreht.

10. Abgabemechanismus nach einem der Ansprüche 1 bis 3 und 5, ferner umfassend ein Antriebsmodul (600); wobei das Antriebsmodul (600) dazu konfiguriert ist, das Drehelement (100) für eine Bewegung in der ersten Richtung anzutreiben.

11. Abgabemechanismus nach Anspruch 10, ferner umfassend ein Messmodul (700) und eine Steuereinrichtung; wobei das Messmodul (700) eine erste Messvorrichtung (710), eine zweite Messvorrichtung (720) und einen Messträger (730) umfasst und die Steuereinrichtung mit der ersten Messvorrichtung (710), der zweiten Messvorrichtung (720) und dem Antriebsmodul (600) verbunden ist;
wobei die erste Messvorrichtung (710) fest an der ersten Endabdeckung (200) oder der zweiten Endabdeckung (400) angeordnet ist, die zweite Messvorrichtung (720) fest an der ersten Endabdeckung (200) oder der zweiten Endabdeckung (400) angeordnet ist, der Messträger (730) fest an dem Drehelement (100) angeordnet ist und das Drehelement (100) den Messträger (730) so antreibt, dass sie sich zwischen der ersten Messvorrichtung (710) und der zweiten Messvorrichtung (720) dreht.

12. Materialaufnahmevorrichtung, **gekennzeichnet durch** eine Trommel (1000) und das Abgabemechanismus nach einem der Ansprüche 1 bis 11; wobei der Abgabemechanismus an einem Ende der Trommel (1000) befestigt ist und eine Öffnung an einem Ende der Trommel (1000) nahe dem Abgabemechanismus mit dem Zuführloch (210) in Verbindung steht.

13. Verkaufsautomat, **gekennzeichnet durch** den Abgabemechanismus nach einem der Ansprüche 1 bis 11.

## Revendications

1. Un mécanisme de déchargement, comprenant :
un élément rotatif (100), muni d'un espace de stockage (110) passant à travers l'élément rotatif ;
un premier couvercle d'extrémité (200), monté à une extrémité de l'élément rotatif (100), le premier couvercle d'extrémité (200) étant muni d'un trou d'alimentation (210) communiquant avec une extrémité de l'espace de stockage (110) ;
un deuxième couvercle d'extrémité (400), monté à l'autre extrémité de l'élément rotatif (100), le deuxième couvercle d'extrémité (400) étant muni d'un trou de déchargement (410) communiquant avec l'autre extrémité de l'espace de stockage (110), dans lequel l'élément rotatif (110) peut pivoter par rapport au premier couvercle d'extrémité (200) et au deuxième couvercle d'extrémité (400) ;
un premier module de vanne (300), agencé entre le premier couvercle d'extrémité (200) et l'élément rotatif (100) ;
un deuxième module de vanne (500), agencé entre le deuxième couvercle d'extrémité (400) et l'élément rotatif (100) ;
un premier module de guidage (800), configuré pour commander au premier module de vanne (300) de fermer ou d'ouvrir le trou d'alimentation (210) lorsque l'élément rotatif (100) pivote ; et
un deuxième module de guidage (900), configuré pour commander au deuxième module de vanne (500) de fermer ou d'ouvrir le trou de déchargement (410) lorsque l'élément rotatif (100) pivote ;
dans lequel lorsque l'un, parmi le premier module de vanne (300) et le deuxième module de vanne (500) est à l'état ouvert, l'autre, parmi le premier module de vanne (300) et le deuxième module de vanne (500) est à l' état fermé ;
**caractérisé en ce que** le premier module de guidage (800) comprend une première gorge de guidage (120) et une première gorge courbe (240), dans lequel la première gorge de guidage (120) est positionnée sur la surface d'extrémité à une extrémité de l'élément rotatif (100) faisant face au premier couvercle d'extrémité (200) et la première gorge courbe (240) est positionnée sur une surface d'extrémité à une extrémité du premier couvercle d'extrémité (200) faisant face à l'élément rotatif (100), ou la première gorge courbe (240) est positionnée sur une surface d'extrémité à une extrémité de l'élément rotatif (100) faisant face au premier couvercle d'extrémité (200) et la première gorge de guidage (120) est positionnée sur une surface d'extrémité à une extrémité du premier couvercle d'extrémité (200) faisant face à l'élément rotatif (100) ;
dans lequel le premier module de vanne (300) comprend un premier déflecteur (310), le premier déflecteur (310) étant muni d'un premier bloc coulissant (311) et d'une première tige de guidage (312),dans lequel le premier bloc coulissant (311) est inséré dans la première gorge de guidage (120) et le premier bloc coulissant (311) peut coulisser le long de la première gorge de guidage (120), la première tige de guidage (312) est insérée dans la première gorge courbe (240) et la première tige de guidage (312) peut coulisser le long de la première gorge courbe (240), et lorsque l'élément rotatif (100) pivote, la première gorge de guidage (120), la première gorge courbe (240), le premier bloc coulissant (311), et la première tige de guidage (312) coopèrent mutuellement pour commander au premier module de vanne (300) d'ouvrir ou de fermer le trou d'alimentation (210) ;
dans lequel la première gorge courbe (240) comprend une première partie (241) se prolongeant de manière circonférentielle le long de l'élément rotatif (100), et une deuxième partie (242) s'étendant depuis l'extrémité de la première partie (241) de manière distale à la ligne axiale de rotation de l'élément rotatif (100) ;
lorsque le premier module de vanne (300) est à l'état ouvert, la première tige de guidage (312) est positionnée à l'extrémité de la deuxième partie (242) de la première gorge courbe (240) distale de la première partie (241) de la première gorge courbe (240), et le premier bloc coulissant (311) est positionné à l'extrémité de la première gorge de guidage (120) proximale de la deuxième partie (242) ; et
lorsque le premier bloc coulissant (311) coulisse vers l'extrémité de la première gorge de guidage (120) distale de la deuxième partie (242), le premier module de vanne (300) couvre au moins partiellement la partie d'extrémité de l'espace de stockage (110) afin de fermer le trou d'alimentation (210).

2. Un mécanisme de déchargement selon la revendication 1, dans lequel l'angle de phase par lequel l'élément rotatif (100) pivote lorsque la première tige de guidage (312) coulisse entre les deux extrémités de la deuxième partie (242) de la première gorge courbe (240) est égal à l'angle de phase par lequel l'élément rotatif (100) pivote lorsque la première tige de guidage (312) coulisse entre les deux extrémités de la première partie (241) de la première gorge courbe (240).

3. Un mécanisme de déchargement selon la revendication 1, dans lequel le nombre de premiers déflecteurs (310), le nombre de premières gorges de guidage (120), et le nombre de premières gorges courbes (240) sont tous au moins de trois ; et
le premier déflecteur (310), la première gorge de guidage (120), la première gorge courbe (240) correspondent mutuellement un-à-un, les au moins trois premières gorges de guidage (120) sont espacés de manière homogène à environ un angle axial de rotation de l'élément rotatif (100), et les au moins trois premières gorges courbes (240) sont espacées de manière homogène à environ un angle axial de rotation de l'élément rotatif (100).

4. Un mécanisme de déchargement selon l'une quelconque des revendications 1 à 3, dans lequel le deuxième module de guidage (900) comprend une deuxième gorge de guidage et une deuxième gorge courbe (440), dans lequel la deuxième gorge de guidage est positionnée sur une surface d'extrémité à une extrémité de l'élément rotatif (100) faisant face au deuxième couvercle d'extrémité (400) et la deuxième gorge courbe (440) est positionnée sur une surface d'extrémité à une extrémité du deuxième couvercle d'extrémité (400) faisant face à l'élément rotatif (100), ou la deuxième gorge courbe (440) est positionné sur une surface d'extrémité à une extrémité de l'élément rotatif (100) faisant face au deuxième couvercle d'extrémité (400) et la deuxième gorge de guidage est positionnée sur une surface d'extrémité à une extrémité du deuxième couvercle d'extrémité (400) faisant face à l'élément rotatif (100) ; et
le deuxième module de vanne (500) comprend un deuxième déflecteur (510), le deuxième déflecteur (510) étant muni d'un deuxième bloc coulissant (511) et d'une deuxième tige de guidage (512), dans lequel le deuxième bloc coulissant (511) est inséré dans la deuxième gorge de guidage et le deuxième bloc coulissant (511) peut coulisser le long de la deuxième gorge de guidage, la deuxième tige de guidage (512) est insérée dans la deuxième gorge courbe (440) et la deuxième tige de guidage (512) peut coulisser le long de la deuxième gorge courbe (440), et lorsque l'élément rotatif (100) pivote, la deuxième gorge de guidage, la deuxième gorge courbe (440), le deuxième bloc coulissant (511), et la deuxième tige de guidage (512) coopèrent mutuellement pour commander au deuxième module de vanne (500) d'ouvrir ou de fermer le trou de déchargement (410).

5. Un mécanisme de déchargement selon la revendication 4, dans lequel la deuxième gorge courbe (440) comprend une troisième partie (441) s'étendant de manière circonférentielle le long de l'élément rotatif (100), et une quatrième partie (442) s'étendant depuis l'extrémité de la troisième partie (441), de manière distale à la ligne axiale de rotation de l'élément rotatif (100) ;
lorsque le deuxième module de vanne (500) est à l'état ouvert, la deuxième tige de guidage (512) est positionnée à l'extrémité de la quatrième partie (442) distale de la troisième partie (441), et le deuxième bloc coulissant (511) est positionné à une extrémité de la deuxième gorge de guidage proximale de la quatrième partie (442) ; et
lorsque le deuxième bloc coulissant (511) coulisse vers l'extrémité de la deuxième gorge de guidage distale de la quatrième partie (442), le deuxième module de vanne (500) couvre au moins partiellement la partie d'extrémité de l'espace de stockage (110) afin de fermer le trou de déchargement (410).

6. Un mécanisme de déchargement selon la revendication 5, dans lequel une direction pointant depuis une extrémité de la première partie (241) proximale de la deuxième partie (242) à l'extrémité de la première partie (241) distale de la deuxième partie (242) est opposée à une direction pointant de l'extrémité de la troisième partie (441) proximale de la quatrième partie (442) à une extrémité de la troisième partie (441) distale de la quatrième partie (442) ; et
durant la rotation de l'élément rotatif (100), lorsque la première tige de guidage (312) est positionnée à une extrémité de la deuxième partie (242) distale de la première partie (241), la deuxième tige de guidage (512) est positionnée à une extrémité de la troisième partie (441) distale de la quatrième partie (442), et lorsque la première tige de guidage (312) est positionnée à une extrémité de la première partie (241) distale de la deuxième partie (242), la deuxième tige de guidage (512) est positionnée à une extrémité de la quatrième partie (442) distale de la troisième partie (441), de sorte que lorsque l'un parmi le premier module de vanne (300) et le deuxième module de vanne (500) est à l'état ouvert, l'autre parmi le premier module de vanne (300) et le deuxième module de vanne (500) est à l'état fermé.

7. Un mécanisme de déchargement selon la revendication 6, dans lequel l'angle de phase par lequel l'élément rotatif (100) pivote lorsque la deuxième tige de guidage (512) coulisse entre deux extrémités de la troisième partie (441) est égal à l'angle de phase par lequel l'élément rotatif (100) pivote lorsque la première tige de guidage (312) coulisse entre les deux extrémités de la deuxième partie (242) ; et
dans lequel l'angle de phase par lequel l'élément rotatif (100) pivote lorsque la deuxième tige de guidage (512) coulisse entre les deux extrémités de la quatrième partie (442) est égal à l'angle de phase par lequel l'élément rotatif (100) pivote lorsque la première tige de guidage (312) coulisse entre les deux extrémités de la première partie (241).

8. Un mécanisme de déchargement selon la revendication 5, dans lequel le nombre de deuxièmes déflecteurs (510), le nombre de deuxièmes gorges de guidage, et le nombre de deuxièmes gorges courbes (440) sont tous au moins de trois ; et
le deuxième déflecteur (510), la deuxième gorge de guidage, la deuxième gorge courbe (440) correspondent mutuellement un-à-un, les au moins trois deuxièmes gorges de guidage sont espacés de manière homogène à environ un angle axial de rotation de l'élément rotatif (100), et les au moins trois deuxièmes gorges courbes (440) sont espacées de manière homogène à environ un angle axial de rotation de l'élément rotatif (100).

9. Un mécanisme de déchargement selon l'une quelconque des revendications 1 à 3 et 5, dans lequel le premier couvercle d'extrémité (200) et le deuxième couvercle d'extrémité (400) sont fixes ;
l'un parmi l'élément rotatif (100) et le premier couvercle d'extrémité (200) est muni d'une première gorge rotative (130), et l'autre parmi l'élément rotatif (100) et le premier couvercle d'extrémité (200) est muni d'une première saillie rotative (230), la première saillie rotative (230) étant insérée dans la première gorge rotative (130), et la première saillie rotative (230) coulissant le long de la première gorge rotative (130) et pivotant selon la ligne axiale de rotation de l'élément rotatif (100) ; et
l'un parmi l'élément rotatif (100) et le premier couvercle d'extrémité (200) est muni d'une deuxième gorge rotative, et l'autre parmi l'élément rotatif (100) et le premier couvercle d'extrémité (200) est muni d'une deuxième saillie rotative (430), la deuxième saillie rotative (430) étant insérée dans la deuxième gorge rotative, et la deuxième saillie rotative (430) coulissant le long de la deuxième gorge rotative et pivotant selon la ligne axiale de rotation de l'élément rotatif (100).

10. Un mécanisme de déchargement selon l'une quelconque des revendications 1 à 3 et 5, comprenant en outre un module d'entraînement (600) ; dans lequel le module d'entraînement (600) est configuré pour entraîner le déplacement de l'élément rotatif (100) dans la première direction.

11. Un mécanisme de déchargement selon la revendication 10, comprenant en outre un module de capteur (700) et un contrôleur ; dans lequel le module de détecteur (700) comprend un premier appareil de détection (710), un deuxième appareil de détection (720), et un substrat de détection (730), et le contrôleur est connecté au premier appareil de détection (710), au deuxième appareil de détection (720), et au module d'entraînement (600) ;
dans lequel le premier appareil de détection (710) est agencé solidement sur le premier couvercle d'extrémité (200) ou sur le deuxième couvercle d'extrémité (400), le deuxième appareil de détection (720) est agencé solidement sur le premier couvercle d'extrémité (200) ou sur le deuxième couvercle d'extrémité (400), le substrat de détection (730) est agencé solidement sur l'élément rotatif (100), et l'élément rotatif (100) entraîne la rotation du substrat de détection (730) entre le premier appareil de détection (710) et le deuxième appareil de détection (720).

12. Un dispositif de stockage de matériel, **caractérisé en ce qu'**il comprend corps cylindrique (1000) et le mécanisme de déchargement tel que défini à l'une quelconque des revendications 1 à 11 ; dans lequel le mécanisme de déchargement est sécurisé à une extrémité du corps cylindrique (1000), et un port à une extrémité du corps cylindrique (1000) proximale du mécanisme de déchargement communique avec le trou d'alimentation (210).

13. Un distributeur automatique en libre-service, **caractérisé en ce qu'**il comprend le mécanisme de déchargement tel que défini à l'une quelconque des revendications 1 à 11.
